# EUROPÄISCHE PATENTSCHRIFT

(11) **EP 3 917 126 B1**
(45) Veröffentlichungstag und Bekanntmachung des Hinweises auf die Patenterteilung: **14.06.2023**
(21) Anmeldenummer: 20176888.4
(22) Anmeldetag: 27.05.2020
(51) Int. Cl.: H04N 5/225, H04N 5/232, G07C 9/25

(54) **VERWENDUNG EINES KAMERASYSTEM MIT EINEM IN DER HÖHE VERFAHRBAREN KAMERAMODUL AN EINEM IDENTIFIKATIONSSCHALTER, ZUM BEISPIEL AN EINEM GRENZKONTROLLSCHALTER**
USE OF A CAMERA SYSTEM WITH HEIGHT-ADJUSTABLE CAMERA MODULE AT AN IDENTIFIKATION DESK, FOR EXAMPLE AT A BORDER
UTILISATION D'UN SYSTÈME DE CAMÉRA DOTÉ D'UN MODULE DE CAMÉRA RÉGLABLE EN HAUTEUR À UN GUICHET D'IDENTIFICATION, PAR EXEMPLE POUR LE CONTRÔLE D'UNE FRONTIÈRE

(43) Veröffentlichungstag der Anmeldung: 01.12.2021
(60) Teilanmeldung: 22206586.4
(73) Patentinhaber: Secunet Security Networks Aktiengesellschaft, 45138 Essen (DE)
(72) Erfinder: SCHWAIGER, Michael, 4291 Lasberg (AT); STEFFENS, Frank, 42549 Velbert (DE)
(74) Vertreter: Andrejewski - Honke Patent- und Rechtsanwälte Partnerschaft mbB

(56) Entgegenhaltungen:
- EP-A1- 0 884 633
- EP-A2- 2 624 534
- WO-A1-2004/075097
- WO-A1-2007/028374
- WO-A1-2010/078856
- CN-A- 106 920 299
- CN-A- 110 012 203
- CN-A- 110 634 196
- CN-A- 111 009 061
- DE-A1- 3 929 273
- DE-A1-102008 053 395
- DE-U1-202020 102 329
- GB-A- 2 524 014
- US-A1- 2003 156 199
- US-A1- 2008 002 956

## Beschreibung

Die Erfindung betrifft ein Kamerasystem für die Identifikation von Personen anhand von Portraitaufnahmen, wobei das Kamerasystem ein Gehäuse, ein Kameramodul und eine Positioniervorrichtung zur Einstellung einer Höhenposition des Kameramoduls aufweist, wobei das Kameramodul wenigstens eine Portraitkamera umfasst, wobei eine Höhenposition des Kameramoduls mithilfe der Positioniervorrichtung in Abhängigkeit von der Körpergröße einer zu identifizierenden Person automatisch einstellbar ist.

Derartige Kamerasysteme sind z. B. aus WO 2010 078 856 A1 oder aus DE 20 2020 102 329 U1 bekannt, firmieren beispielsweise unter dem Begriff "EasyPASS" und werden dem Umstand gerecht, dass die Erfassung von in-situ-Portraitaufnahmen aufgrund rechtlicher bzw. technischer Rahmenbedingungen zunehmend an Bedeutung gewinnt. Demzufolge umfasst eine insbesondere für einen Grenzübertritt an Flughäfen gedachte Personendurchgangskontrolle in Form einer Schleuse mehrere Spuren, wobei jede Spur eine Eingangs- und eine Ausgangstür aufweist. Für den Durchgang durch eine Spur legt eine Person zunächst ihr Identifikationsdokument, z. B. einen Reisepass oder einen Personalausweis, auf ein Lesegerät, wodurch ein Ausweisfoto sowie weitere Passdaten ausgelesen werden. Nach dem Auslesen des Identifikationsdokumentes öffnet sich die Eingangstür. Die zu identifizierende Person betritt jetzt einen inneren Bereich der Schleuse bzw. der Schleusenspur, welcher von den beiden Türen begrenzt wird. Dann tritt die zu identifizierende Person an ein Kamerasystem heran, welches eine Portraitaufnahme der Person *in situ* aufnimmt.

Diese so aufgenommene Portraitaufnahme wird mit dem ausgelesenen Ausweisfoto per automatischer Gesichtserkennung abgeglichen. Sofern die Gesichtserkennung ausreichend Gemeinsamkeiten erkennt, wird die Person als identifiziert betrachtet und die Ausgangstür geöffnet. Anderenfalls kann z. B. der zuständige Grenzbeamte automatisch gerufen werden, um eine manuelle Kontrolle vorzunehmen. Im Falle von "EasyPASS" handelt es sich um ein freiwilliges, zusätzliches Angebot, welches herkömmliche Grenzkontrollschalter nicht ersetzt und sich v. a. an Vielflieger aus europäischen Staaten richtet. Allerdings sind die Lösungen gemäß WO 2010 078 856 A1 oder DE 20 2020 102 329 U1 v. a. aufgrund der Türen bzw. aufgrund des mit den Türen definierten Bereiches verhältnismäßig platzintensiv.

Deutlich weniger platzintensiv ist hingegen ein Kamerasystem gemäß WO 2007 028 374 A1, weil dieses Kamerasystem türfrei ist. Dieses Kamerasystem wird an einer Wand montiert und umfasst eine direkt mit der Wand verschraubte Positioniervorrichtung in Form einer Schiene sowie ein von der Schiene getragenes und in Höhenrichtung verfahrbares Gehäuse, sodass die Positioniervorrichtung das Gehäuse trägt. In dem Gehäuse befinden sich u. a. ein Lesegerät für Ausweisdokumente sowie ein Kameramodul zur in-situ-Portraitaufnahme einer zu identifizierenden Person. Im Falle eines verdächtigen Ausweisdokumentes klemmt das Lesegerät das Ausweisdokument fest, sodass die zu identifizierende Person auch durch ein starkes Ziehen das Dokument jedenfalls nicht unversehrt aus dem Lesegerät entfernen kann. Dann ist jedoch diese Person vorgewarnt, weshalb erhöhte Fluchtgefahr besteht. Dieses Problem könnte durch Stationierung von Sicherheitspersonal bzw. Grenzbeamten an dem Kamerasystem gelöst werden, was allerdings dem Grundgedanken eines schlanken und dennoch effizienten Sicherheitsapparates zuwiderläuft.

Darüber hinaus sind aus US 2008/0002956 A1, US 2003/0156199 A1 und EP 0 884 633 A1 Kamerasysteme bekannt, die der automatisierten Erstellung von Fotos dienen. Diese Kamerasysteme sind beispielsweise als stationäre Fotokabinen oder mobile Fotostationen ausgestaltet, jedoch nicht auf eine Gesichtserkennung ausgerichtet. In GB 2524014 A ist ein säulenförmiges Gehäuse für ein Kamerasystem beschrieben, wobei das Gehäuse bzw. Kamerasystem auch für die Gesichtserkennung an Drehkreuzen genutzt werden kann. Das Gehäuse umfasst eine Vielzahl an Fensteröffnungen, welche für mehrere, jeweils übereinander angeordnete Kameras und Bildschirme gedacht sind. In WO 2004/075097 A1 ist ein an einer Wand montiertes, hängendes Kamerasystem zur Identifikation von Personen offenbart. Ein Kameramodul dieses Kamerasystems ist drehbeweglich ausgebildet.

CN 110 634 196 A offenbart eine multifunktionale intelligente vertikale Anwesenheitsmaschine, wobei ein Hebemechanismus die Anwesenheitsmaschine antreiben kann, um sich nach oben oder unten zu bewegen, das mit einer Steuerung einer Gesichtserkennungskamera verbunden ist. Die Gesichtserkennungskamera hat Modi zur Erkennung eines Kindes oder zur Erkennung eines Erwachsenen. Die Steuerung bewegt die Gesichtserkennungskamera auf eine für Kinder oder eine für Erwachsene erforderliche Höhe, abhängig vom selektierten Modus.

Es ist daher Aufgabe der Erfindung, ein platzsparendes Kamerasystem zur automatischen Identifikation von Personen mittels in-situ-Portraitaufnahmen - insbesondere von Flugreisenden - vorzuschlagen, welches die Abläufe der Personenidentifikation effizienter gestaltet, ohne zugleich einen personellen Mehraufwand an anderer Stelle zu verursachen.

Dieses Problem wird gelöst durch die Verwendung eines Kamerasystems an einem Identifikationsschalter für die Identifikation von Personen anhand von Portraitaufnahmen, wobei der Identifikationsschalter einen Arbeitsbereich umfasst, in welchem sich eine kontrollierende Person aufhält bzw. aufhalten kann, wobei der Identifikationsschalter einen Übergabebereich umfasst, in welchem eine zu identifizierende Person ein Identifikationsdokument der kontrollierenden Person im Identifikationsschalter übergeben kann, wobei das Kamerasystem ein Gehäuse, ein Kameramodul und eine Positioniervorrichtung zur Einstellung einer Höhenposition des Kameramoduls aufweist, wobei das Kameramodul wenigstens eine Portraitkamera umfasst, wobei eine Höhenposition des Kameramoduls mithilfe der Positioniervorrichtung in Abhängigkeit von der Körpergröße einer zu identifizierenden Person automatisch einstellbar ist, wobei das Gehäuse die Positioniervorrichtung trägt, wobei das Kameramodul wenigstens teilweise und vorzugsweise vollständig innerhalb des Gehäuses angeordnet ist, wobei das Gehäuse relativ zum Boden ortsfest fixierbar ist, wobei das Kamerasystem nicht an einer Schiebe- oder Schwenktür angeordnet ist oder sich synchron dazu bewegt, wobei das Kamerasystem eine Gesichtserkennung umfasst und/oder mit einer Gesichtserkennung verbunden ist, wobei die Positioniervorrichtung eine sich in Höhenrichtung erstreckende Führungsschiene umfasst, wobei das Kamerasystem als Säule ausgebildet ist, wobei das Kamerasystem selbsttragend und aufstellbar ist.

Der Begriff "Identifikationsschalter" meint vorzugsweise einen Arbeitsplatz einer Person zum Abgleich eines Lichtbildes eines Identifikationsdokumentes, beispielsweise eines Reisepasses oder eines Personalausweises, mit der in-situ-Portraitaufnahme. Mit dem Begriff "Identifikationsschalter" sind vorzugsweise Grenzkontrollschalter, beispielsweise an Flughäfen, aber auch Schalter in Botschaften oder Konsulaten gemeint, bei denen Personen anhand von Identifikationsdokumenten identifiziert werden.

Die Ausdrücke "einstellbare Höhenposition" bzw. "Positioniervorrichtung" meinen vorzugsweise eine physikalische oder eine digitale Positionierung. Im Falle der physikalischen Positionierung kann beispielsweise ein Elektromotor das Kameramodul verfahren. Im Falle einer digitalen Positionierung kann es vorgesehen sein, eine Mehrzahl an Kameras in Höhenrichtung anzuordnen, welche ein hochkant stehendes Panoramabild erfassen, während ein länglich ausgebildeter und hochkant stehender Monitor nur den Bildbereich aktiviert, der sich auf der Höhe des Gesichtes der zu identifizierenden Person befindet.

Der Ausdruck "wobei das Gehäuse die Positioniervorrichtung trägt" meint vorzugsweise, dass die sich in Höhenrichtung erstreckende Positioniervorrichtung aufgrund des Gehäuses der Schwerkraft widersteht. Würde beispielsweise die Positioniervorrichtung aus WO 2007 028 374 A1 weggedacht, so würde das dort offenbarte Gehäuse zu Boden fallen. Folglich ist dort nicht offenbart, dass das Gehäuse die Positioniervorrichtung trägt, sondern der umgekehrte Fall, wonach die Positioniervorrichtung das Gehäuse trägt.

Der Erfindung liegt die Erkenntnis zugrunde, dass im Falle von einem durch das Gehäuse selbst getragenen Antriebssystem das Kamerasystem als *stand-alone-Gerät* und damit sehr flexibel angeordnet werden kann. Hierdurch entfällt die Notwendigkeit, das Kamerasystem an der Wand oder an einem sonstigen, baulich feststehenden Element zu befestigen. Dies bringt zunächst den Nachteil mit sich, dass das Kamerasystem recht wuchtig zwecks Vermeidung von Stürzen gestaltet und mit einem Rollensystem zwecks Transport versehen werden müsste. Denn bei Ausbildung als schlank ausgebildete Säule wäre das Kamerasystem innerhalb eines Flughafens auf Dauer einer nicht unerheblichen Sturzgefahr ausgesetzt - als Beispiele seien ungehaltene, unachtsame bzw. betrunkene Fluggäste genannt. Es wäre daher erforderlich, die Säule am Boden mittels Verschraubung zu fixieren.

Allerdings ändern sich in den meisten Flughäfen von Zeit zu Zeit die Gegebenheiten. Inventar wie Fluglinienschalter, Personenführungselemente und Sicherheitskontrollen einschließlich Grenzkontrollschaltern sind immer wieder Änderungen bezüglich ihrer Position innerhalb des Flughafens unterworfen, sodass das Inventar entsprechend oft den Platz wechselt. Bezüglich der erwähnten schlanken Säulen bedeutete dies, dass unansehnliche Bohrlöcher im ästhetisch oft ansprechend gestalteten Fußboden des Flughafens zu sehen wären. Dies wäre mit entsprechenden Ausbesserungskosten verbunden. Außerdem bringt dieses Kamerasystem noch den Nachteil mit sich, dass nach wie vor Sicherheitspersonal in der Nähe des Kamerasystems erforderlich wäre.

Diese Nachteile aber werden durch die Flexibilität bei der Aufstellung des Kamerasystems allesamt überkompensiert. Denn beispielsweise im Falle der Ausbildung als schlanke Säule kann das erfindungsgemäße Kamerasystem direkt vor einem Identifikationsschalter (Grenzkontrollschalter oder Kontrollschalter in Botschaften / Konsulaten) z. B. per Verschraubung am Boden angeordnet werden. Da Identifikationsschalter häufig ebenfalls mobil ausgebildet sind, kommt der Flexibilität des Kamerasystems eine maßgebliche Bedeutung zu. Die disziplinierende Wirkung von ohnehin einzusetzendem Sicherheitspersonal (Grenzbeamte oder Sicherheitsdienst) lässt die Vandalismusgefahr sinken. Auch wird durch die Anwesenheit des Kontrollbeamten die Fluchtgefahr verringert. So kann dieser jederzeit einen stillen Alarmknopf betätigen, ohne dass die zu identifizierende bzw. schon identifizierte Person hiervon etwas merkt. Außerdem sind die Identifikationsschalter in aller Regel in einem stärker gesicherten Gebäudebereich angeordnet, sodass die Flucht erschwert wird. Schließlich besteht noch die vorteilhafte Möglichkeit, das Kamerasystem beispielsweise über eine Klemm- oder auch Schraubverbindung an dem Identifikationsschalter zu befestigen, um die Sturzgefahr weiter zu verringern.

Der Kontrollbeamte erhält zunächst das Ausweisdokument von der zu identifizierenden Person und legt es in ein Lesegerät des Kontrollschalters, sodass ein Lesegerät im Kamerasystem sowie ein Mechanismus zum Festklemmen des Ausweisdokumentes nicht mehr erforderlich sind. Hierdurch muss das Kamerasystem auch nicht mehr dazu ausgebildet sein, einer an einem festgeklemmten Identifikationsdokument ziehenden Person zu widerstehen. Dadurch wird das Kamerasystem weiter vereinfacht und in der Folge leichter, flexibler und eleganter. Die schlanke Ausführung führt auch dazu, dass der Kontrolleur (der Grenzbeamte oder der Mitarbeiter eines Sicherheitsdienstes bzw. einer Botschaft / eines Konsulates) von seinem Identifikationsschalter aus einen guten Blick auf die zu identifizierende Person hat, was insbesondere der Sicherheit, aber auch der Effizienz zugutekommt. Beispielsweise kann der Kontrolleur der zu identifizierenden Person zusätzliche Anweisungen für die in-situ-Portraitaufnahme geben. Durch die erfindungsgemäße Ausgestaltung des Kamerasystems wird ein platzsparender Effekt bei der in-situ-Identifizierung erreicht, weil kein zusätzlicher Platz mehr an ohnehin raren, feststehenden baulichen Elementen vorgesehen werden muss. Auch kann auf die zusätzliche Stationierung von Sicherheitspersonal verzichtet werden, sodass der personelle Aufwand auf das ohnehin erforderliche Minimum beschränkt werden kann. Im Ergebnis löst die Erfindung das oben aufgezeigte Problem.

Der Ausdruck "ortsfest fixierbar" meint vorzugsweise, dass das Gehäuse als Ganzes mithilfe einer Fixierung relativ zu einem Boden unbeweglich ist mit Ausnahme des Lösens der Fixierung. Dieser Ausdruck schließt diejenigen Fälle aus, bei denen das Kamerasystem an einer Schiebe- oder Schwenktür angeordnet ist oder sich synchron dazu bewegt, weil hier das Kamerasystem relativ zum Boden durch Verschiebung oder Verschwenkung bewegt wird und deswegen nicht ortsfest fixierbar ist.

Vorzugsweise ist die Positioniervorrichtung wenigstens teilweise und vorzugsweise vollständig innerhalb des Gehäuses angeordnet. Insbesondere ist bevorzugt, dass das Kameramodul und/oder die Positioniervorrichtung zu wenigstens 30 bzw. 50 bzw. 70 bzw. 90 bzw. 95 Gew.-% innerhalb des Gehäuses angeordnet sind.

Gemäß einer besonders bevorzugten Ausführungsform weist das Kamerasystem einen Fuß zum Aufstellen des Kamerasystems auf dem Fußboden auf. Es ist ganz besonders bevorzugt, dass das Kamerasystem ein *stand-alone-Gerät* ist. Zweckmäßigerweise trägt der Fuß des Kamerasystems das Gehäuse. Es ist möglich, dass zwischen dem Fuß und dem Gehäuse ein Bein angeordnet ist. Der Fuß mag eine Grundfläche aufspannen, wobei die Grundfläche bevorzugt höchstens 5000 / 4000 / 3000 cm² beträgt. Zweckmäßigerweise beläuft sich die Grundfläche auf wenigstens 200 / 300 / 350 cm². Der Fuß ist vorzugsweise als Platte ausgebildet und mag insbesondere Bohrlöcher zur Verbindung mit dem Fußboden umfassen. Die Platte des Fußes kann insbesondere einen Stahl aufweisen, welcher vorzugsweise wenigstens 5 bzw. 6 bzw. 8 mm dick ist. Vorteilhafterweise ist der Fuß mit einer Pulverbeschichtung versehen, welche dem Fuß eine dunkle bzw. schwarze Farbe verleiht.

Es ist sehr bevorzugt, dass das Kamerasystem als freistehende Säule ausgebildet ist. Es ist von Vorteil, dass das Gehäuse profilförmig ausgestaltet ist. Die Breite des Gehäuses beträgt vorzugsweise wenigstens 15 bzw. 20 bzw. 25 cm. Die Breite mag sich höchstens auf 60 bzw. 50 bzw. 40 cm belaufen. Die Tiefe des Gehäuses beträgt mit Vorteil wenigstens 5 bzw. 7 bzw. 9 cm. Die Tiefe des Gehäuses mag sich maximal auf 25 / 20 / 15 cm belaufen. Die Höhe des Kamerasystems entspricht wenigstens 170 bzw. 180 bzw. 190 cm. Die Höhe des Kamerasystems mag höchstens 250 / 230 / 220 cm betragen. Es ist sehr bevorzugt, dass die Ausdehnung des Gehäuses in der Breite größer ist als in der Tiefe. Vorzugsweise ist das Gehäuse wenigstens 1,5-fach bzw. 1,8-fach bzw. zweifach breiter als tief. Es ist bevorzugt, dass das Gehäuse einen durchgängigen Querschnitt der Außenflächen aufweist. Zweckmäßigerweise ist eine Profilstruktur der Außenseiten des Gehäuses durchgängig dieselbe. Es ist sehr bevorzugt, dass die Breite und/oder die Tiefe des Gehäuses über wenigstens 50 % bzw. 70 % bzw. 90 % der Höhe des Gehäuses hinweg konstant ist. Es ist sehr bevorzugt, dass das Gehäuse wenigstens 50 % bzw. 70 % bzw. 90 % der Höhe des Kamerasystems ausmacht. Das Gehäuse mag ein Stahlblech umfassen, welches beispielsweise 3 mm stark ist und vorzugsweise eine Pulverbeschichtung aufweist. Es ist sehr bevorzugt, dass das Gehäuse ein Vorderteil sowie ein Rückteil aufweist. Das Vorderteil kann beispielsweise mit einer hellen, insbesondere weißen, Pulverbeschichtung versehen sein. Das Rückteil kann eine dunkle, beispielsweise schwarze, Pulverbeschichtung aufweisen.

Es ist sehr bevorzugt, dass das Kamerasystem bzw. das Kameramodul eine Livebild-Kamera und/oder ein Bildwiedergabefeld umfasst. Es ist grundsätzlich möglich, dass eine einzelne, physische Kamera zugleich Portraitkamera und Livebild-Kamera ist. Bevorzugt ist, dass die Portraitkamera und die Livebild-Kamera wenigstens zwei unterschiedliche Kameras sind. Es ist von Vorteil, dass die Auflösung der Portraitkamera größer ist als die Auflösung der Livebild-Kamera. Die Auflösung der Portraitkamera beträgt vorwiegend mindestens 4 / 8 / 10 Megapixel (MP) und bevorzugt höchstens 40 / 30 / 25 MP. Die Portraitkamera umfasst vorzugweise eine Linse, deren Brennweite beispielsweise zwischen 3,0 und 5,0 mm betragen mag. Die Auflösung der Livebild-Kamera beläuft sich bevorzugt auf wenigstens 0,5 / 1,0 / 1,5 MP und vorzugsweise auf höchstens 8 / 6 / 4 MP. Es ist von Vorteil, wenn die Auflösung bzw. Pixelzahl der Portraitkamera wenigstens um einen Faktor 2, vorzugsweise um wenigstens einen Faktor 3 oder 4 größer ist als die Auflösung bzw. Pixelzahl der Livebild-Kamera. Die Livebild-Kamera umfasst vorteilhafterweise wenigstens zwei Einzelkameras für die Aufnahme von Stereobildern und/oder einen RGB-Sensor und/oder einen Infrarot-Projektor. Es ist sehr bevorzugt, dass die Livebild-Kamera Daten zur Erstellung von dreidimensionalen Bildern aufnehmen kann. Vorzugsweise umfasst das Kameramodul ein Bildwiedergabefeld zur Wiedergabe eines Gesichtes - beispielsweise in Form eines elektronischen Bildschirms oder eines Spiegels. Es ist sehr bevorzugt, dass der Bildschirm Bilder, insbesondere Livebilder der Livebild-Kamera, darstellt. Es ist sehr bevorzugt, dass der Bildschirm mithilfe der Livebild-Kamera die Funktion eines Spiegels übernimmt. Gemäß einer anderen Ausführungsform ist das Bildwiedergabefeld ein herkömmlicher Spiegel, welcher mit Vorteil Konturen zur Positionierung des Gesichtes aufweist.

Die Gesichtserkennung ist vorzugsweise ausgebildet, ein menschliches Gesicht von einem Hintergrund zu unterscheiden. Besonders vorzugsweise ermittelt das Kamerasystem mithilfe einer der Kameras, bevorzugt mit der Livebild-Kamera, ob das Gesicht einer zu identifizierenden Person korrekt im Verhältnis zur Kamera ausgerichtet und/oder beleuchtet ist. Vorzugsweise wird die Gesichtserkennung aktiviert, sobald ein Startsignal ausgegeben wurde. Das Startsignal kann beispielsweise durch einen Sensor oder manuell durch eine Person im Identifikationsschalter ausgegeben werden. Es ist von Vorteil, wenn das Kamerasystem bzw. die Gesichtserkennung so ausgebildet ist, dass in einem Moment mit korrekter Ausrichtung eines Gesichtes einer zu identifizierenden Person und/oder einer korrekten Beleuchtung ein Auslösesignal ausgegeben wird. Zweckmäßigerweise veranlasst das Auslösesignal eine der Kameras, vorzugsweise die Portraitkamera, zur Portraitaufnahme des Gesichtes der zu identifizierenden Person. Es liegt im Rahmen der Erfindung, dass die Portraitaufnahme an den Identifikationsschalter und/oder an eine übergeordnete Stelle bzw. einen Server übermittelt wird. Es ist bevorzugt, dass die Gesichtserkennung ausgebildet ist, Unterschiede und/oder Gemeinsamkeiten von Gesichtern bzw. deren Bildern zu erfassen. Besonders vorzugsweise ist die Gesichtserkennung in der Lage, eine Entscheidung zu treffen, ob es sich bei zwei unterschiedlichen Portraitaufnahmen - beispielsweise einer *in*-*situ*-Portraitaufnahme der Portraitkamera einerseits und ein Passbild eines Identifikationsdokumentes - um dasselbe Gesicht handelt.

Es ist sehr von Vorteil, dass das Kamerasystem eine Vorrichtung zur Erkennung der Körpergröße von zu identifizierenden Personen umfasst. Es ist bevorzugt, dass die Vorrichtung zur Erkennung der Körpergröße die Gesichtserkennung aufweist bzw. nutzt. Gemäß einer Ausführungsform ist das Kamerasystem so ausgebildet, dass das Kameramodul so lange verfahren wird, bis ein Gesicht einer vor dem Kamerasystem stehenden Person erkannt wird. Dann wird beispielsweise die Portraitkamera oder die Livebild-Kamera aktiviert und das Gesicht auf korrekte Ausrichtung und/oder Beleuchtung überprüft. Bei positiver Prüfung wird bevorzugt ein Auslösesignal an die Portraitkamera ausgegeben.

Es liegt im Rahmen der Erfindung, dass die Positioniervorrichtung einen Elektromotor umfasst. Es ist zweckmäßig, dass die Führungsschiene senkrecht verläuft. Es ist bevorzugt, dass die Positioniervorrichtung einen Führungsschlitten auf der Führungsschiene aufweist. Vorteilhafterweise umfasst die Führungsschiene einen Zahnriemen, wobei der Zahnriemen zweckmäßigerweise mit dem Führungsschlitten verbunden ist. Vorzugsweise ist der Elektromotor mit dem Zahnriemen verbunden, sodass der Führungsschlitten entlang der Führungsschiene verfahrbar ist. Es liegt im Rahmen der Erfindung, dass das Kameramodul mit dem Führungsschlitten verbunden ist. Es ist sehr bevorzugt, dass die Führungsschiene in einer Vorderansicht einer ersten Seitenwand des Gehäuses zugeordnet ist. Zweckmäßigerweise ist das Kameramodul in einer Vorderansicht zwischen der Führungsschiene und der der ersten Seitenwand gegenüberliegenden Seitenwand (= zweite Seitenwand) angeordnet. Bevorzugtermaßen ist der Elektromotor ein Schrittmotor, wobei der Schrittwinkel vorzugsweise 1,5 bis 2° beträgt. Der Elektromotor mag ein Haltemoment von 3 bis 4 Nm aufweisen und beispielsweise einen Nennstrom von 3 bis 5 A ziehen. Es liegt im Rahmen der Erfindung, dass die Positioniervorrichtung eine Motorsteuerung umfasst.

Es ist sehr bevorzugt, dass die Positioniervorrichtung eine Schleppkette umfasst. Es ist bevorzugt, dass die Schleppkette innerhalb des Gehäuses angeordnet ist. Die Schleppkette umfasst insbesondere Kabel zur Spannungsversorgung des Kameramoduls und/oder Kabel zur Datenübertragung und/oder wenigstens ein Erdungskabel. Kabel zur Datenübertragung können beispielsweise Buskabel, z. B. für einen CAN-Bus oder einen RS485-Bus, und/oder ein Ethernet-Kabel sein. Es ist bevorzugt, dass die Schleppkette eine oder mehrere elektrische bzw. elektronische Verbindungen zwischen dem Kameramodul und statisch fixierten Komponenten innerhalb des Kamerasystems bzw. des Gehäuses herstellt. Es ist besonders bevorzugt, dass die Schleppkette der zweiten bzw. einer Seitenwand zugeordnet ist. Es ist von Vorteil, dass ein erstes Ende der Schleppkette an einer Befestigungsstelle der zweiten Seitenwand bzw. am Gehäuse befestigt ist. Zweckmäßigerweise ist das zweite Ende der Schleppkette mit dem Kameramodul verbunden. Es ist bevorzugt, dass die Kabel von der Befestigungsstelle an der zweiten Seitenwand nach unten verlaufen und dort vorzugsweise mit dem Elektromotor und/oder der Motorsteuerung und/oder einer/der Beleuchtungssteuerung verbunden sind.

Es ist von Vorteil, dass die Vorderseite des Gehäuses eine transparente Öffnung aufweist, wobei bevorzugt ist, dass die transparente Öffnung als eine Fensterscheibe ausgebildet ist. Die Fensterscheibe umfasst zweckmäßigerweise ein Glas oder einen Kunststoff, beispielsweise Sicherheitsglas bzw. Polycarbonat. Es ist besonders bevorzugt, dass wenigstens eine Gehäusewand bzw. das Gehäuse in einer Vorderansicht wenigstens einen Teil der Positioniervorrichtung und vorzugsweise die gesamte Positioniervorrichtung verdeckt. Der Begriff "verdeckt" meint bevorzugt, dass der verdeckte Teil in einer Vorderansicht, insbesondere aus der Perspektive einer 1,75 m großen Person in einer Entfernung von 0,5 m zum Kamerasystem, aufgrund des Gehäuses bzw. der Gehäusewände den verdeckten Teil der Positioniervorrichtung nicht sehen kann. Der Begriff "verdeckende Gehäusewand" meint vorzugsweise ein Element mit einem blickdichten bzw. opaken Material, sodass der verdeckte Teil der Positioniervorrichtung in einer Vorderansicht nicht sichtbar ist. Es ist bevorzugt, dass in einer Vorderansicht eine links oder rechts der transparenten Öffnung befindliche verdeckende Gehäusewand die Führungsschiene verdeckt. Vorzugsweise verdeckt eine verdeckende Gehäusewand unterhalb der transparenten Öffnung einen Elektromotor und/oder eine Motorsteuerung und/oder eine Komponente zur Spannungsversorgung. Besonders vorzugsweise verdeckt in einer Vorderansicht eine erste verdeckende Gehäusewand die Führungsschiene und/oder eine zweite verdeckende Gehäusewand wenigstens einen Teil der Schleppkette.

Gemäß einer besonders bevorzugten Ausführungsform weist das Kamerasystem eine Rückseitenblende auf, welche zwischen der Portraitkamera und/oder der Livebild-Kamera und/oder dem Bildwiedergabefeld einerseits und einer Rückseite des Gehäuses bzw. der Innenseite der Rückwand des Gehäuses andererseits angeordnet ist. Vorzugsweise weicht die Größe der Fläche der Rückseitenblende um höchstens +/- 50 % bzw. +/- 30 % bzw. +/-10 % von derjenigen der transparenten Öffnung ab. Es ist bevorzugt, dass die Fläche der Rückseitenblende größer ist als die Fläche der transparenten Öffnung. Zweckmäßigerweise ist die dem Betrachter zugewandte Seite der Rückseitenblende grau oder schwarz. Insbesondere handelt es sich bei dem Grau oder dem Schwarz der Rückseitenblende um die Graustufe 7F oder dunkler bis hin zu Tiefschwarz (Graustufe 00) in der Graustufentabelle im Hexadezimalsystem. Es ist besonders bevorzugt, dass wenigstens ein Teil der Schleppkette durch die Rückseitenblende verdeckt ist, der sonst bei Betrachtung durch die transparente Öffnung sichtbar wäre.

Besonders vorzugsweise umfasst das verfahrbare Kameramodul einen vorderen Teil und einen hinteren Teil, wobei zwischen dem vorderen Teil und dem hinteren Teil ein Abstand befindlich ist, sodass zwischen dem vorderen Teil und dem hinteren Teil des verfahrbaren Kameramoduls ein relativ zum Gehäuse feststehendes Element anordenbar bzw. angeordnet ist. Es ist bevorzugt, dass das feststehende Element eine/die Rückseitenblende ist. Es ist möglich, dass das feststehende Element ein Bildschirm ist, welcher sich seiner Länge nach von oben nach unten erstreckt und vorzugsweise wenigstens 50 % bzw. 70 % bzw. 90 % der Höhe der transparenten Öffnung entspricht. Der vordere Teil des Kameramoduls umfasst vorzugsweise die Portraitkamera und/oder die Livebild-Kamera und/oder das Bildwiedergabefeld. Es ist von Vorteil, wenn der vordere Teil eine Frontblende aufweist. Vorteilhafterweise umfasst der hintere Teil ein Trägerelement, welches bevorzugt als Platte ausgebildet ist. Zweckmäßigerweise trägt das Trägerelement eine Recheneinheit und/oder Elektronikkomponenten. Es ist sehr bevorzugt, dass das Trägerelement eine Anbindung für das zweite Ende der Schleppkette aufweist. Die Anbindung kann beispielsweise in Form eines abgewinkelten Abschnitts des Trägerelements bzw. der Platte ausgebildet sein. Das zweite Ende der Schleppkette kann beispielsweise über eine Schraubverbindung an der Anbindung in Form des abgewinkelten Abschnitts des Trägerelements befestigt sein. Es liegt im Rahmen der Erfindung, dass von dem zweiten Ende der Schleppkette Kabel zur Recheneinheit bzw. zu der Portraitkamera und/oder zu der Livebild-Kamera und/oder zu dem Bildwiedergabefeld führen. Es ist besonders bevorzugt, dass das zweite Ende der Schleppkette bzw. die Anbindung des Trägerelements von der Rückseitenblende bzw. dem feststehenden Element in einer Vorderansicht verdeckt wird. Es ist möglich, dass das Trägerelement mit dem Führungsschlitten verbunden ist. Es ist sehr bevorzugt, dass der vordere Teil des Kameramoduls zwischen der Vorderwand des Gehäuses und der Rückseitenblende bzw. dem feststehenden Element angeordnet ist. Es ist von Vorteil, dass der hintere Teil des Kameramoduls zwischen der Rückwand des Gehäuses und der Rückseitenblende bzw. dem feststehenden Element befindlich ist. Das Kameramodul umfasst sehr bevorzugt ein Montageelement, wobei das Montageelement den vorderen und den hinteren Teil des Kameramoduls miteinander verbindet. Das Montageelement umfasst einen dem hinteren Teil bzw. den Trägerelement zugeordneten Abschnitt und/oder einen dem vorderen Teil zugeordneten Abschnitt und/oder einen diese beiden Abschnitte verbindenden Verbindungsabschnitt. Der Verbindungsabschnitt wird bevorzugt in einer Vorderansicht von einer verdeckenden Gehäusewand verdeckt. Der Verbindungsabschnitt des Montageelementes ist vorzugsweise derselben Seitenwand wie die Führungsschiene bzw. der Führungsschlitten zugeordnet. Der Verbindungsabschnitt ist zweckmäßigerweise so ausgebildet, dass der Abstand zwischen dem vorderen und dem hinteren Teil des Kameramoduls ausreicht, um eine Rückseitenblende bzw. ein feststehendes Element dazwischen anzuordnen.

Gemäß einer bevorzugten Ausführungsform umfasst das Kamerasystem eine Beleuchtungseinheit, wobei es bevorzugt ist, dass die Beleuchtungseinheit bzw. deren Helligkeit steuerbar und/oder regelbar ist. Es ist sehr bevorzugt, dass die Beleuchtungseinheit bzw. deren Helligkeit in wenigstens einer verdeckenden Gehäusewand links und/oder rechts der transparenten Öffnung angeordnet ist. Es ist bevorzugt, dass die Beleuchtungseinheit wenigstens einen und vorzugsweise zwei Leuchtstreifen aufweist. Der Leuchtstreifen oder die Leuchtstreifen ist/sind bevorzugt länglich ausgebildet und erstreckt bzw. erstrecken sich weiter bevorzugt in Höhenrichtung. Der Leuchtstreifen bzw. die Leuchtstreifen umfasst bzw. umfassen zweckmäßigerweise wenigstens eine Leuchtdiode und vorzugsweise eine Vielzahl an Leuchtdioden. Es ist von Vorteil, dass die Leuchtdiode bzw. die Leuchtdioden von einem lichtstreuenden Material abgedeckt sind. Es ist besonders bevorzugt, dass das Kamerasystem eine Beleuchtungssteuerung aufweist. Die Beleuchtungseinheit bzw. deren Helligkeit ist vorzugsweise über die Beleuchtungssteuerung regelbar. Die Beleuchtungssteuerung ist vorzugsweise mit der Portraitkamera und/oder der Livebild-Kamera verbunden und ermittelt bevorzugt, ob das Gesicht der aufzunehmenden Person korrekt beleuchtet ist. Die Beleuchtungssteuerung ist vorzugsweise so ausgebildet, dass sie im Falle einer zu starken oder zu schwachen Beleuchtung des Gesichtes die Beleuchtung nachregelt. Es ist möglich, dass die Beleuchtungseinheit bzw. deren Helligkeit manuell steuerbar ist, indem beispielsweise ein Steuerelement in dem Identifikationsschalter bereitgestellt ist. Zweckmäßigerweise wird die Beleuchtungssteuerung von dem Gehäuse des Kamerasystems bzw. der Vorderwand bzw. einer verdeckenden Gehäusewand verdeckt. Es ist bevorzugt, dass die Beleuchtungssteuerung unterhalb der transparenten Öffnung angeordnet ist.

Vorzugsweise umfasst das Kamerasystem wenigstens einen Sensor für Handbiometrie, insbesondere einen Fingerabdrucksensor. Es ist möglich, dass der Sensor für Handbiometrie in einer Vorderansicht an einer rechten und/oder linken Seite des Kamerasystems angeordnet ist.

Die eingangs genannte Aufgabe wird gelöst durch eine Kameraanlage für die Identifikation von Personen, insbesondere vor Identifikationsschaltern, wobei die Kameraanlage zwei erfindungsgemäße Kamerasysteme umfasst, wobei die beiden Kamerasysteme mit ihrer Rückseite dem jeweils anderen Kamerasystem zugewandt sind. Gemäß einer vorteilhaften Ausführungsform sind die optischen Achsen der beiden Portraitkameras zueinander antiparallel ausgerichtet. Es ist möglich, dass die optischen Achsen der beiden Portraitkameras wenigstens 90°, vorzugsweise wenigstens 120° bzw. 150° und besonders vorzugsweise 180° (antiparalleler Fall) einschließen. Besonders vorzugsweise sind die Rückseiten der beiden Gehäuse parallel zueinander ausgerichtet. Es ist möglich, dass die zwei Kamerasysteme über ein Verbindungselement miteinander fixiert sind. Das Verbindungselement umfasst vorzugsweise den Fuß und ist weiter vorzugsweise als gemeinsame Platte ausgebildet.

Die Verwendung eines erfindungsgemäßen Kamerasystems oder einer erfindungsgemäßen Kameraanlage an einem Grenzkontrollschalter, besonders vorzugsweise an einem Grenzkontrollschalter eines Flughafens, ist bevorzugt. Vorteilhafterweise ist das Kamerasystem bzw. die Kameraanlage vor und bevorzugt unmittelbar vor dem Identifikationsschalter positioniert. Es ist sehr bevorzugt, dass das Kamerasystem weniger als 5 m, vorzugsweise weniger als 2 m bzw. 1 m von dem Übergabebereich entfernt ist. Es ist möglich, dass das Kamerasystem bzw. die Kameraanlage an dem Identifikationsschalter befestigt ist. Gemäß einer Ausführungsform ist der Identifikationsschalter mit zwei Kontrollplätzen ausgestattet, sodass gleichzeitig zwei zu identifizierende Personen von zwei kontrollierenden Personen überprüft werden können. Für diese Identifikationsschalter ist es eine Option, wenn die Kameraanlage in einer Vorderansicht des Identifikationsschalters zwischen den beiden Kontrollplätzen angeordnet ist.

Nachfolgend wird ein Ausführungsbeispiel der Erfindung anhand mehrerer Figuren näher erläutert. Es zeigen in schematischer Darstellung
- Fig. 1: eine perspektivische Ansicht eines erfindungsgemäßen Kamerasystems in einer ersten Anordnung vor einem Identifikationsschalter,
- Fig. 2: eine perspektivische Ansicht des Kamerasystems aus Fig. 1 in einer zweiten Anordnung vor dem Identifikationsschalter,
- Fig. 3: das Kamerasystem der Fig. 1 und 2 in einer vergrößerten, perspektivischen Ansicht,
- Fig. 4: das Kamerasystem der Fig. 1 bis 3 in einer Vorderansicht ohne Vorderteil des Gehäuses,
- Fig. 5: eine Explosionszeichnung eines Kameramoduls aus dem Kamerasystem der Fig. 1 bis 4 und
- Fig. 6: eine Vorderansicht des Kameramoduls aus Fig. 5 mit einer Rückseitenblende.

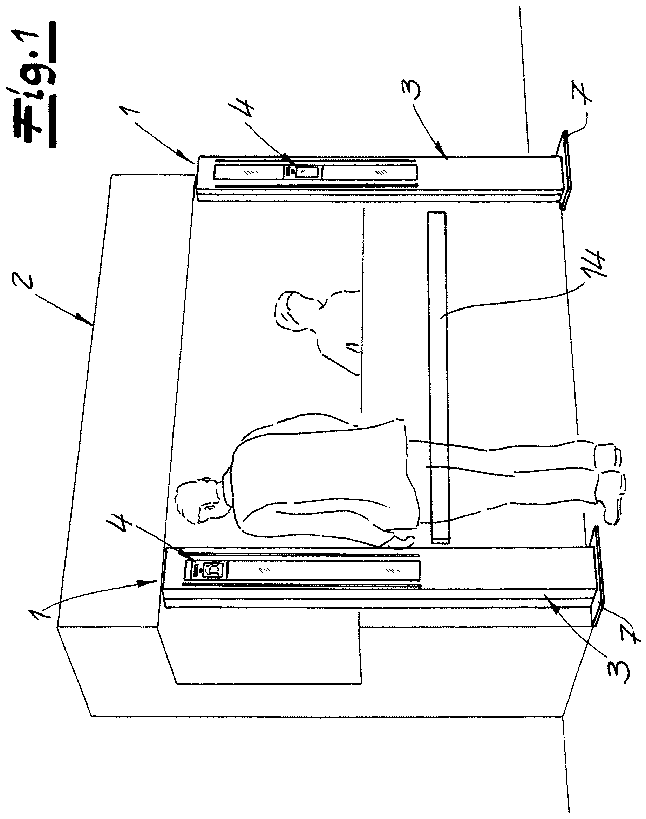

In Fig. 1 sind zwei erfindungsgemäße Kamerasysteme 1 vor einem Identifikationsschalter 2 in Form eines Grenzkontrollschalters angeordnet. Der Identifikationsschalter 2 mag beispielsweise für zwei Grenzbeamte ausgelegt sein und umfasst eine Abstellleiste 14, auf welcher beispielsweise Taschen, kleine Koffer oder dergleichen von zu identifizierenden Personen abgestellt werden können. Die beiden Kamerasysteme 1 mögen in der in Fig. 1 gezeigten beispielhaften Anordnung die Abstellleiste 14 links und rechts begrenzen. Das Kamerasystem 1 dieses Ausführungsbeispiels umfasst einen Fuß 7 in Form einer Stahlplatte mit 10 mm Stärke und vier Bohrlöchern zwecks Schraubbefestigung. Das Kamerasystem 1 weist ferner ein Gehäuse 3 auf, welches auf dem Fuß 7 steht und innerhalb welchem ein Kameramodul 4 verfahrbar ist.

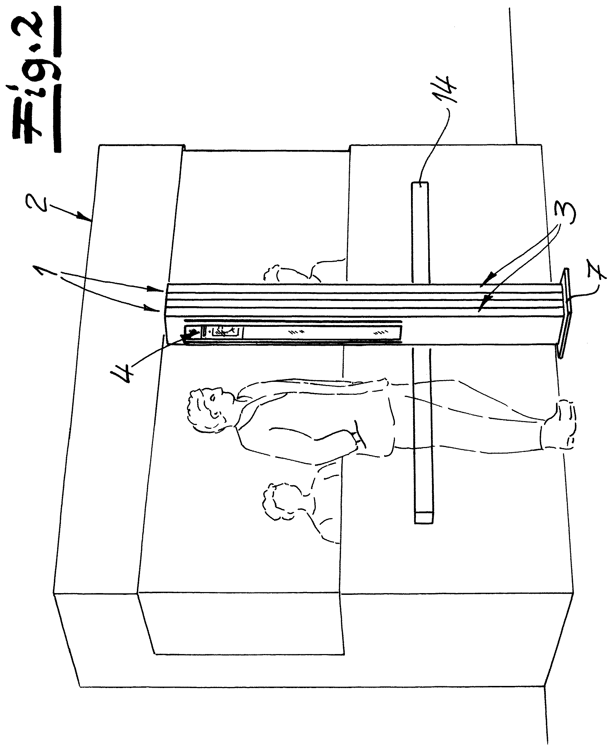

In einer zweiten Anordnung nach Fig. 2 sind die beiden Kamerasysteme 1 in der Mitte vor dem Identifikationsschalter 2 bzw. vor der Abstellleiste 14 angeordnet. Dabei berühren sich die beiden Kamerasysteme 1 jeweils mit ihren Rückseiten, sodass eine besonders kompakte und optisch ansprechende Anordnung vorliegt. Gemäß weiteren Anordnungen können allerdings die Kamerasysteme 1 auch noch etwas schräg gestellt werden, sodass diese den zu identifizierenden Personen noch mehr zugewandt sind und zwischen sich ein V bilden, welches sich in Richtung des Identifikationsschalters 2 öffnet.

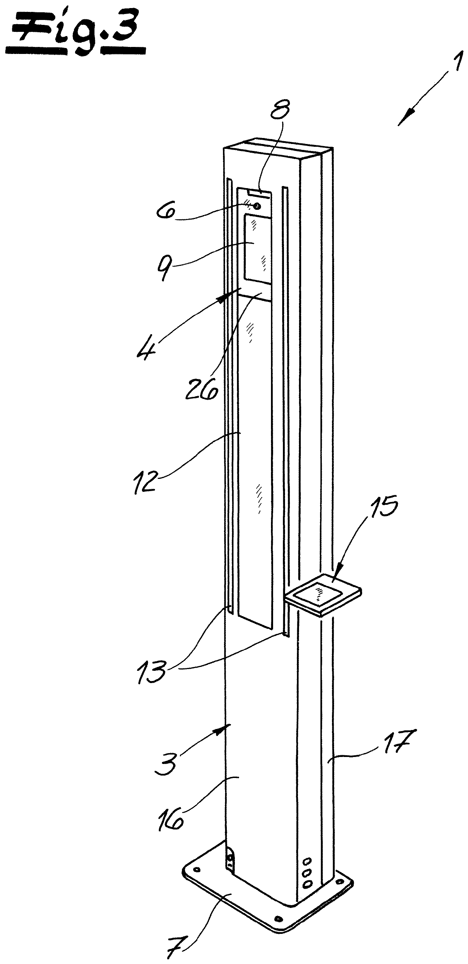

In Fig. 3 ist das Kamerasystem 1 vergrößert abgebildet, sodass beispielsweise die Bohrlöcher des Fußes 7 erkennbar sind. Das Gehäuse 3 dieses Ausführungsbeispiels weist ein Vorderteil 16 sowie ein Rückteil 17 auf, welche beide auf dem Fuß 7 stehen. Sowohl das Vorderteil 16 als auch das Rückteil 17 umfassen vorzugsweise ein Stahlblech, dessen Stärke beispielsweise 3 mm betragen mag. Es ist bevorzugt, dass das Vorderteil 16, das Rückteil 17 sowie der Fuß 7 pulverbeschichtet sind, um eine gewünschte Farbgebung zu erreichen. In diesem Ausführungsbeispiel ist das Vorderteil verkehrsweiß, das Rückteil staubgrau und der Fuß verkehrsschwarz gehalten.

Das Kamerasystem 1 umfasst nach Fig. 3 im Vorderteil 16 des Gehäuses 3 eine transparente Öffnung 12, welche als Fenster mit einer Fensterscheibe aus transparentem Polycarbonat ausgestaltet ist. Zweckmäßigerweise schützt die Fensterscheibe der transparenten Öffnung 12 das dahinterliegende bzw. im Gehäuseinneren liegende Kameramodul 4, welches vorteilhafterweise entlang der transparenten Öffnung 12 verfahrbar ist. Das Kameramodul 4 umfasst vorzugsweise eine Portraitkamera 6, eine Livebild-Kamera 8 sowie ein Bildwiedergabefeld 9.

Das Kameramodul 4 ist in diesem Ausführungsbeispiel so gestaltet, dass mittels einer Gesichtserkennung eine Vorrichtung zur Erkennung der Körpergröße von zu identifizierenden Personen realisiert wurde. Hierzu mag beispielsweise ein Bewegungssensor oder eine Person im Identifikationsschalter ein Startsignal ausgeben, woraufhin das Kameramodul 4 solange verfahren wird, bis ein Gesicht erkannt wird. Vorteilhafterweise werden die Daten der Livebild-Kamera 8 sowohl an das Bildwiedergabefeld 9 als auch an die Gesichtserkennung übertragen. Dadurch kann die zu identifizierende Person sich vor dem Kamerasystem 1 anhand der Wiedergabe des eigenen Gesichtes im Bildwiedergabefeld 9 korrekt vor dem Kamerasystem 1 positionieren. Ermittelt die Gesichtserkennung die korrekte Positionierung des Gesichtes vor dem Kamerasystem 1, so wird ein Auslösesignal ausgegeben, woraufhin die Portraitkamera eine Portraitaufnahme mit höherer Auflösung vornimmt. Die Auflösung der Livebild-Kamera 8 dieses Ausführungsbeispiels mag 2 MP, die Auflösung der Portraitkamera 6 13 MP betragen. Die Portraitaufnahmen werden daraufhin dem Identifikationsschalter 2 und/oder einem Server übermittelt.

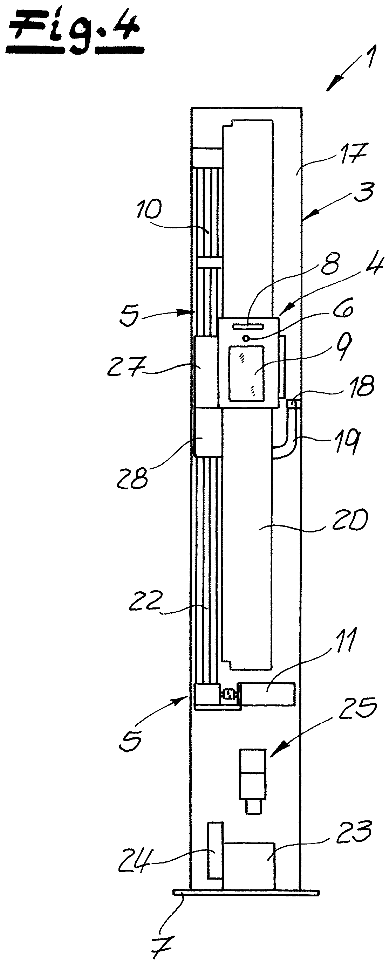

Gemäß Fig. 3 umfasst das Kamerasystem 1 außerdem eine Beleuchtungseinheit 13, welche in diesem Ausführungsbeispiel zwei neben der transparenten Öffnung 12 angeordnete Beleuchtungsstreifen umfasst. Die Beleuchtungseinheit 13 bzw. die Beleuchtungsstreifen erstrecken sich zweckmäßigerweise entlang der transparenten Öffnung 12, sodass für jede Körpergröße eine ausreichende Beleuchtung gewährleistet wird. Es ist bevorzugt, dass die Beleuchtungseinheit 13 situationsempfindlich ist und stets auf eine optimale Beleuchtungsstärke geregelt wird. Hierzu ist in diesem Ausführungsbeispiel die Livebild-Kamera 8 mit einer Beleuchtungssteuerung 24 (s. Fig. 4) verbunden, welche bei zu hellen oder zu dunklen Livebildern die Beleuchtung entsprechend anpasst. Die Beleuchtungsstreifen der Beleuchtungseinheit 13 dieses Ausführungsbeispiels umfassen jeweils eine Reihe an Leuchtdioden, welche der Reihe nach in Höhenrichtung in etwa gleichmäßigen Abständen zueinander angeordnet sind. Die Leuchtdioden mögen vorteilhafterweise mit einem lichtstreuenden Material, beispielsweise einem Polycarbonat, abgedeckt sein, sodass neben dem Schutz der Leuchtdioden insbesondere eine Lichtstreuung und damit eine etwas gleichmäßigere Beleuchtung erzeugt wird. Schließlich mag das Kamerasystem 1 einen oder zwei Sensoren für Handbiometrie 15 aufweisen, welche rechts und/oder links am Gehäuse 3 angeordnet ist/sind.

In Fig. 4 ist eine Vorderansicht des Kamerasystems 1 zu erkennen, wobei das Vorderteil 16 des Gehäuses 3 entfernt wurde, sodass das Innere des Kamerasystems 1 zum Vorschein kommt. Das Kameramodul 4 ist bevorzugt an einem durch Elemente 27 und 28 verdeckten Führungsschlitten befestigt, welcher auf einer Führungsschiene 10 gleitend bzw. verfahrbar gelagert ist. Hierzu treibt ein Elektromotor 11 einen Zahnriemen 22 an, welcher sich entlang der Führungsschiene 10 erstreckt und an welchen der Führungsschlitten 18 angeschlossen ist. Der Elektromotor 11 ist vorzugsweise als Schrittmotor ausgestaltet und mag einen Schrittwinkel von 1,8° bei einem Haltemoment von wenigstens 1,1 Nm aufweisen und wenigstens 2,5 A Strom bei Vollauslastung ziehen.

Der Elektromotor 11 wird hierzu zweckmäßigerweise von einer Motorsteuerung 23 angesteuert, welche - wie vorteilhafterweise der Elektromotor 11 auch - unterhalb der transparenten Öffnung 12 angeordnet ist. Im Bereich der Motorsteuerung 23 und damit unterhalb der transparenten Öffnung finden sich noch weitere Komponenten, worunter insbesondere eine Beleuchtungssteuerung 24 sowie verschiedene elektrische Komponenten 25 fallen. Die Beleuchtungssteuerung 24 dient der Ansteuerung der Beleuchtungseinheit 13, um stets optimal ausgeleuchtete Portraitaufnahmen erstellen zu können. Die elektrischen Komponenten 25 umfassen beispielsweise Leitungsschutzschalter, Klemmen und/oder FI-Schutzschalter.

In Fig. 4 ist außerdem noch eine Rückseitenblende 20 hervorzuheben, welche dunkel bzw. schwarz ausgestaltet ist und zwischen dem Bildwiedergabefeld 9 und dem Rückteil 17 des Gehäuses 3 angeordnet ist. Die Rückseitenblende 20 hat im Wesentlichen die Abmessungen der transparenten Öffnung 12 und dient dazu, für einen vor dem Kamerasystem 1 stehenden Betrachter das Innenleben des Kamerasystems 1 zu vergleichmäßigen. Hierbei entsteht bei der Wahl der Farbe Schwarz ein besonderer Effekt, weil der Betrachter das Gefühl hat in ein Nichts zu blicken. Dies erzeugt einen nicht unerheblichen, ästhetischen Effekt.

Eine Schleppkette 19 ist gemäß Fig. 4 mit ihrem ersten Ende 18 an der der Führungsschiene 10 gegenüberliegenden Innenseite des Gehäuses 3 befestigt. Die Schleppkette 19 führt verschiedene Kabel (Erdung, Spannungsversorgung, Ethernetkabel, einen CAN-Bus und/oder einen RS485-Bus,) zu dem Kameramodul 4. Die Schleppkette 19 hat die Aufgabe, die Kabel aufgrund der häufigen Bewegung des Kameramoduls 4 vor zu starken Biegungen zu schützen, sodass die Schleppkette 19 die Lebensdauer der Kabel erhöht bzw. die Zahl der außerplanmäßigen Wartungen verringert. Dabei ist insbesondere auf den Umstand hinzuweisen, dass ein Teil bzw. ein zweites Ende der Schleppkette 19 zwischen der Rückseitenblende 20 und dem Rückteil 17 des Gehäuses angeordnet und damit verdeckt ist. Demgegenüber sind insbesondere das Bildwiedergabefeld 9 sowie die Kameras 6, 8 zwischen der Rückseitenblende 20 und dem Vorderteil 16 des Gehäuses 3 angeordnet.

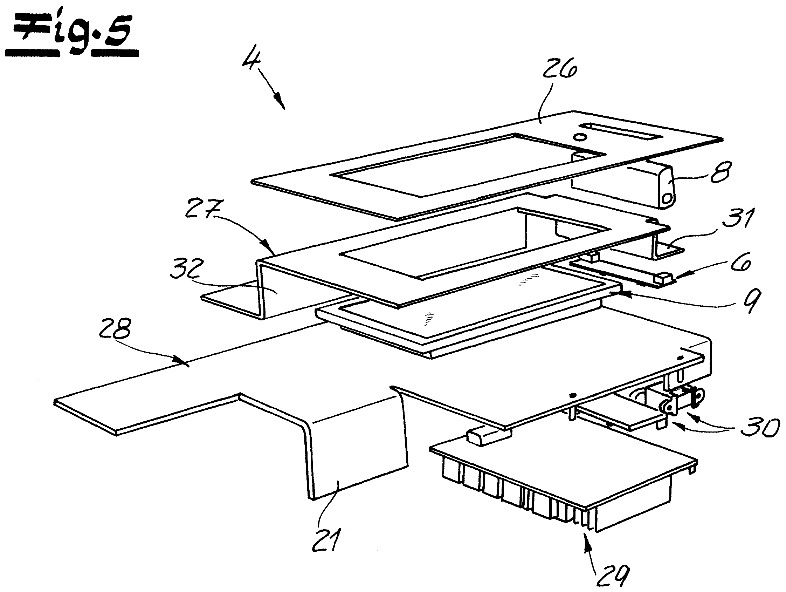

Dieser nur scheinbare Widerspruch wird in Fig. 5 aufgelöst, in welcher eine Explosionsdarstellung des Kameramoduls 4 gezeigt ist. Neben den bereits erwähnten Komponenten der Portraitkamera 6, der Livebild-Kamera 8 sowie des Bildwiedergabefeldes 9 umfasst das Kameramodul 4 in Fig. 5 von oben nach unten eine Frontblende 26, ein Montageelement 27, ein Trägerelement 28, eine Recheneinheit 29 sowie Elektronikkomponenten 30. Bei den Elektronikkomponenten 30 mag es sich um Schnittstellen bzw. USB-Eingänge handeln. Die Recheneinheit 30 dieses Ausführungsbeispiels mag als Einplatinencomputer (Single-Board Computer, SBC) ausgebildet sein. Das Trägerelement 28 wird in diesem Ausführungsbeispiel mit dem Führungsschlitten 18 der Positioniervorrichtung 5 verbunden.

Mit Blick auf die Tiefenverhältnisse in Fig. 5 (die Richtung von oben nach unten) ist festzustellen, dass die Ausdehnung des Montageelementes 27 in Tiefenrichtung größer ist als diejenige des Bildwiedergabefeldes 9, der Livebild-Kamera 8 sowie der Portraitkamera 6. Insbesondere mit Blick auf eine Halterung 31 des Montageelementes 27 für die Livebild-Kamera 8 ist festzustellen, dass die Halterung 31 weniger stark in die Tiefe reicht im Vergleich zu einer Seitenwand 32 des Montageelementes 27. Dies führt dazu, dass die an der Rückseite des Montageelementes 27 montierten Komponenten 6, 8, 9 einen Abstand von etwa 1 cm zu dem Trägerelement 28 aufweisen. Dieser Abstand zwischen den Komponenten 6, 8, 9 und dem Trägerelement 28 wird dazu genutzt, die bereits erwähnte Rückseitenblende 20 einzuführen, sodass für einen außenstehenden Betrachter ein Teil des Trägerelementes 28 von der Rückseitenblende 20 verdeckt wird. Hierzu gehört insbesondere eine Anbindung 21 in Form einer Abwinkelung des Trägerelementes 28, an welcher das bereits angesprochene, verdeckte Ende der Schleppkette 19 befestigt wird.

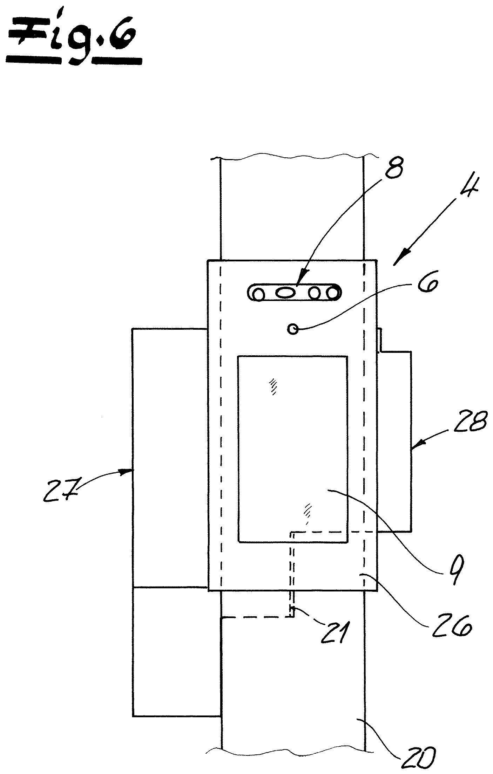

Wird nun, wie in Fig. 6 gezeigt, die Rückseitenblende 20 in den Zwischenraum zwischen den Komponenten 6, 8, 9 einerseits und dem Trägerelement 28 andererseits geschoben, so wird ein Teil des Trägerelementes 28 und insbesondere die Anbindung 21 für die Schleppkette 19 verdeckt, wie dies mit gestrichelten Linien hervorgehoben wurde. Somit ist ein vorderer Teil des Kameramoduls 4 mit den Komponenten 6, 8, 9 sowie der Frontblende 26 zwischen der Rückseitenblende 20 und dem Vorderteil 16 des Gehäuses 3 angeordnet, während ein hinterer Teil des Kameramoduls 4 mit den Komponenten 21, 28, 29, 30 zwischen der Rückseitenblende 20 und dem Rückteil 17 des Gehäuses 3 befindlich ist. Das Verbindungselement zwischen dem vorderen Teil 6, 8, 9, 26 und dem hinteren Teil 21, 28, 29 30 des Kameramoduls 4 ist das Montageelement 27 und insbesondere dessen Seitenwand 32.

Für einen außenstehenden Betrachter sind aufgrund der transparenten Öffnung 12 bzw. deren Einfassung im Vorderteil 16 des Gehäuses 3 die in Fig. 6 links und rechts überstehenden Komponenten jenseits der Frontblende 26 ebenfalls nicht zu sehen, sodass der Betrachter lediglich die Frontblende 26 und die Komponenten 6, 8, 9 wahrnimmt. Hierdurch entsteht für den Betrachter der Eindruck, als ob das Kameramodul 4 aufwärts und abwärts schweben würde, was viele Betrachter fasziniert.

| **Bezugszeichenliste** | | | |
|---|---|---|---|
| **B.Z** | **Bezeichnung** | **B.Z** | **Bezeichnung** |
| 1 | Kamerasystem | 22 | Zahnriemen |
| 2 | Identifikationsschalter | 23 | Motorsteuerung |
| 3 | Gehäuse | 24 | Beleuchtungssteuerung |
| 4 | Kameramodul | 25 | Elektrische Komponenten |
| 5 | Positioniervorrichtung | 26 | Frontblende |
| 6 | Portraitkamera | 27 | Montageelement |
| 7 | Fuß | 28 | Trägerelement |
| 8 | Livebild-Kamera | 29 | Recheneinheit |
| 9 | Bildwiedergabefeld | 30 | Elektronikkomponenten |
| 10 | Führungsschiene | 31 | Halterung |
| 11 | Elektromotor | 32 | Seitenwand |
| 12 | transparente Öffnung | | |
| 13 | Beleuchtungseinheit | | |
| 14 | Abstellleiste | | |
| 15 | Sensor für Handbiometrie | | |
| 16 | Vorderteil | | |
| 17 | Rückteil | | |
| 18 | Erstes Ende der Schleppkette | | |
| 19 | Schleppkette | | |
| 20 | Rückseitenblende | | |
| 21 | Anbindung für | | |

## Patentansprüche

1. Verwendung eines Kamerasystems (1) an einem Identifikationsschalter (2) für die Identifikation von Personen anhand von Portraitaufnahmen, wobei der Identifikationsschalter (2) einen Arbeitsbereich umfasst, in welchem sich eine kontrollierende Person aufhält bzw. aufhalten kann, wobei der Identifikationsschalter (2) einen Übergabebereich umfasst, in welchem eine zu identifizierende Person ein Identifikationsdokument der kontrollierenden Person im Identifikationsschalter (2) übergeben kann, wobei das Kamerasystem (1) ein Gehäuse (3), ein Kameramodul (4) und eine Positioniervorrichtung (5) zur Einstellung einer Höhenposition des Kameramoduls (4) aufweist, wobei das Kameramodul (4) wenigstens eine Portraitkamera (6) umfasst, wobei eine Höhenposition des Kameramoduls (4) mithilfe der Positioniervorrichtung (5) in Abhängigkeit von der Körpergröße einer zu identifizierenden Person automatisch einstellbar ist, wobei das Gehäuse (3) die Positioniervorrichtung (5) trägt, wobei das Kameramodul (4) wenigstens teilweise innerhalb des Gehäuses (3) angeordnet ist, wobei das Gehäuse (3) relativ zum Boden ortsfest fixierbar ist, wobei das Kamerasystem (1) nicht an einer Schiebe- oder Schwenktür angeordnet ist oder sich synchron dazu bewegt, wobei das Kamerasystem (1) eine Gesichtserkennung umfasst und/oder mit einer Gesichtserkennung verbunden ist, wobei die Positioniervorrichtung (5) eine sich in Höhenrichtung erstreckende Führungsschiene (10) umfasst, wobei das Kamerasystem (1) als Säule ausgebildet ist, wobei das Kamerasystem (1) selbsttragend und aufstellbar ist.

2. Verwendung eines Kamerasystems (1) nach Anspruch 1, wobei die Positioniervorrichtung (5) wenigstens teilweise und vorzugsweise vollständig innerhalb des Gehäuses (3) angeordnet ist/sind.

3. Verwendung eines Kamerasystems (1) einem der Ansprüche 1 oder 2, wobei das Kamerasystem (1) einen Fuß (7) zum Aufstellen des Kamerasystems (1) auf dem Fußboden aufweist.

4. Verwendung eines Kamerasystems (1) nach einem der Ansprüche 1 bis 3, wobei das Kamerasystem (1) bzw. das Kameramodul (4) eine Livebild-Kamera (8) und/oder ein Bildwiedergabefeld (9) umfasst.

5. Verwendung eines Kamerasystems (1) nach einem der Ansprüche 1 bis 4, wobei die Gesichtserkennung vorzugsweise ausgebildet ist, ein menschliches Gesicht von einem Hintergrund zu unterscheiden.

6. Verwendung eines Kamerasystems (1) nach einem der Ansprüche 1 bis 5, wobei die Positioniervorrichtung (5) eine Schleppkette (19) umfasst.

7. Verwendung eines Kamerasystems (1) nach einem der Ansprüche 1 bis 6, wobei die Vorderseite des Gehäuses (3) eine transparente Öffnung (12) aufweist, wobei bevorzugt ist, dass die transparente Öffnung (12) als eine Fensterscheibe ausgebildet ist.

8. Verwendung eines Kamerasystems (1) nach einem der Ansprüche 1 bis 7, wobei das Kamerasystem eine Rückseitenblende (20) aufweist, welche zwischen der Portraitkamera (6) und einer Rückseite des Gehäuses (3) angeordnet ist.

9. Verwendung eines Kamerasystems (1) nach einem der Ansprüche 1 bis 8, wobei das verfahrbare Kameramodul (4) einen vorderen Teil und einen hinteren Teil umfasst, wobei zwischen dem vorderen Teil und dem hinteren Teil ein Abstand befindlich ist, sodass zwischen dem vorderen Teil und dem hinteren Teil des verfahrbaren Kameramoduls (4) ein relativ zum Gehäuse (3) feststehendes Element anordenbar bzw. angeordnet ist.

10. Verwendung eines Kamerasystems (1) nach einem der Ansprüche 1 bis 9, wobei das Kamerasystem (1) eine Beleuchtungseinheit (13) umfasst, wobei es bevorzugt ist, dass die Beleuchtungseinheit (13) steuerbar und/oder regelbar ist.

11. Verwendung einer Kameraanlage für die Identifikation von Personen anhand von Portraitaufnahmen, insbesondere vor Identifikationsschaltern (2), wobei die Kameraanlage zwei Kamerasysteme (1) nach einem der Ansprüche 1 bis 10 umfasst, wobei die beiden Kamerasysteme (1) mit ihrer Rückseite oder in einer Vorderansicht mit ihrer linken bzw. rechten Seite dem jeweils anderen Kamerasystem (1) zugewandt sind.

12. Verwendung eines Kamerasystems (1) oder einer Kameraanlage nach einem der Ansprüche 1 bis 12 an einem Grenzkontrollschalter, vorzugsweise an einem Grenzkontrollschalter eines Flughafens.

## Claims

1. A use of a camera system (1) at an identification counter (2) for the identification of persons by way of portrait photographs, wherein the identification counter (2) includes a working area, in which an inspecting person resides / can reside, wherein the identification counter (2) includes a hand-over area, in which a person to be identified can hand over an identification document to the inspecting person at the identification counter (2), wherein the camera system (1) has a housing (3), a camera module (4) and a positioning device (5) for adjusting a height position of the camera module (4), wherein the camera module (4) includes at least one portrait camera (6), wherein a height position of the camera module (4) is automatically adjustable with the aid of a positioning device (5) in dependence of the body size of a person to be identified, wherein the housing (3) supports the positioning device (5), wherein the camera module (4) is at least partially arranged within the housing (3), wherein the housing (3) is immovably fixable relative to the floor, wherein the camera system (1) is not arranged on a sliding / hinged door or moving synchronously with it, wherein the camera system (1) includes a facial recognition and/or is connected to a facial recognition, wherein the positioning device (5) includes a guide rail (10) extending in height direction, wherein the camera system (1) is designed as a column, wherein the camera system (1) is self-supporting and placeable.

2. The use of a camera system (1) according to claim 1, wherein the positioning device (5) is/are at least partially and preferably completely arranged within the housing (3).

3. The use of a camera system (1) according to one of claims 1 or 2, wherein the camera system (1) has a foot (7) for placing the camera system (1) on the floor.

4. The use of a camera system (1) according to one of claims 1 to 3, wherein the camera system (1) / the camera module (4) includes a live image camera (8) and/or an image reproduction field (9).

5. The use of a camera system (1) according to one of claims 1 to 4, wherein the facial recognition is preferably designed to distinguish a human face from a background.

6. The use of a camera system (1) according to one of claims 1 to 5, wherein the positioning device (5) includes a drag chain (19).

7. The use of a camera system (1) according to one of claims 1 to 6, wherein the front of the housing (3) has a transparent opening (12), wherein it is preferred that the transparent opening (12) is designed as a window pane.

8. The use of a camera system (1) according to one of claims 1 to 7, wherein the camera system has a rear side panel (20), which is arranged between the portrait camera (6) and a rear side of the housing (3).

9. The use of a camera system (1) according to one of claims 1 to 8, wherein the movable camera module (4) includes a front part and a rear part, wherein there exists a gap between the front part and the rear part, so that an element stationary relative to the housing (3) can be / is arranged between the front part and the rear part of the movable camera module (4).

10. The use of a camera system (1) according to one of claims 1 to 9, wherein the camera system (1) includes a lighting unit (13), wherein it is preferred that the lighting unit (13) is controllable and/or adjustable.

11. A use of a camera plant for the identification of persons by way of portrait photographs, in particular in front of identification counters (2), wherein the camera plant comprises two camera systems (1) according to one of claims 1 to 10, wherein the two camera systems (1) each face the respectively other camera system (1) with their rear side or in a front view with their lefthand / right-hand side.

12. The use of a camera system (1) or a camera plant according to one of claims 1 to 12 at a border control counter, preferably a border control counter at an airport.

## Revendications

1. Utilisation d'un système de caméra (1) dans un guichet d'identification (2) pour l'identification de personnes à partir de clichés de portrait, le guichet d'identification (2) comprenant une zone fonctionnelle dans laquelle une personne à contrôler se tient ou peut se tenir, le guichet d'identification (2) comprenant une zone de dépôt dans laquelle une personne à identifier peut déposer un document d'identification de la personne à contrôler dans le guichet d'identification (2), le système de caméra (1) présentant un boîtier (3), un module de caméra (4) et à dispositif de positionnement (5) pour le réglage d'une position en hauteur du module de caméra (4), le module de caméra (4) comprenant au moins une caméra à portrait (6), une position en hauteur du module de caméra (4) étant réglable automatiquement à l'aide du dispositif de positionnement (5) en fonction de la stature d'une personne à identifier, le boîtier (3) supportant le dispositif de positionnement (5), le module de caméra (4) étant disposé au moins partiellement dans le boîtier (3), le boîtier (3) pouvant être fixé de manière inamovible par rapport au sol, le système de caméra (1) n'étant pas disposé sur une porte coulissante ou pivotante ou se déplaçant de manière synchrone par rapport à celle-ci, le système de caméra (1) comprenant un système de reconnaissance faciale et/ou étant connecté à un système de reconnaissance faciale, le dispositif de positionnement (5) comprenant un rail de guidage (10) s'étendant dans le sens de la hauteur, le système de caméra (1) étant réalisée sous forme d'une colonne, le système de caméra (1) étant autoporteur et pouvant être réglé en hauteur.

2. Utilisation d'un système de caméra (1) selon la revendication 1, dans lequel le dispositif de positionnement (5) est disposé au moins partiellement et de préférence entièrement dans le boîtier (3).

3. Utilisation d'un système de caméra (1) selon une des revendications 1 ou 2, dans lequel le système de caméra (1) présente un pied (7) pour poser le système de caméra (1) sur le sol.

4. Utilisation d'un système de caméra (1) selon une des revendications 1 à 3, dans lequel le système de caméra (1) ou le module de caméra (4) comprend une caméra d'imagerie en direct (8) et/ou un champ de restitution d'images (9).

5. Utilisation d'un système de caméra (1) selon une des revendications 1 à 4, dans lequel le système de reconnaissance faciale est de préférence conçu pour différencier un visage humain d'un arrière-plan.

6. Utilisation d'un système de caméra (1) selon une des revendications 1 à 5, dans lequel le dispositif de positionnement (5) comprend une chaîne de traction (19).

7. Utilisation d'un système de caméra (1) selon une des revendications 1 à 6, dans lequel la face avant du boîtier (3) présente une ouverture transparente (12), sachant que l'ouverture transparente (12) est réalisée de préférence sous forme d'une vitre de fenêtre.

8. Utilisation d'un système de caméra (1) selon une des revendications 1 à 7, dans lequel le système de caméra présente un écran de face arrière (20) qui est disposé entre la caméra à portrait (6) et une face arrière du boîtier (3).

9. Utilisation d'un système de caméra (1) selon une des revendications 1 à 8, dans lequel le module de caméra déplaçable (4) comprend une partie avant et une partie arrière, une distance se trouvant entre la partie avant et la partie arrière, de sorte que, entre la partie avant et la partie arrière du module de caméra déplaçable (4), un élément inamovible par rapport au boîtier (3) peut être ou est disposé.

10. Utilisation d'un système de caméra (1) selon une des revendications 1 à 9, dans lequel le système de caméra (1) comprend une unité d'éclairage (13), sachant que l'unité d'éclairage (13) peut de préférence être commandée et/ou réglée.

11. Utilisation d'une installation de caméra pour l'identification de personnes à partir de clichés de portrait, en particulier devant des guichets d'identification (2), l'installation de caméra comprenant deux systèmes de caméra (1) selon une des revendications 1 à 10, les deux systèmes de caméra (1) étant tournés par leur face arrière ou, vus de l'avant, par leur face gauche ou droite, vers respectivement l'autre système de caméra (1).

12. Utilisation d'un système de caméra (1) ou d'une installation de caméra selon une des revendications 1 à 12 à un guichet de contrôle frontalier, de préférence à un guichet de contrôle frontalier d'un aéroport.
